# EUROPÄISCHE PATENTSCHRIFT

(11) **EP 3 419 781 B1**
(45) Veröffentlichungstag und Bekanntmachung des Hinweises auf die Patenterteilung: **08.04.2020**
(21) Anmeldenummer: 17705905.2
(22) Anmeldetag: 20.02.2017
(51) Int. Cl.: B23C 5/10

(54) **FRÄSWERKZEUG**
MILLING TOOL
OUTIL DE FRAISAGE

(30) Priorität: 26.02.2016 DE 102016203128
(43) Veröffentlichungstag der Anmeldung: 02.01.2019
(73) Patentinhaber: MAPAL Fabrik für Präzisionswerkzeuge Dr. Kress KG, 73431 Aalen (DE)
(72) Erfinder: KRENZER, Ulrich, 87787 Wolfertschwenden (DE); MÜLLER, Marco, 88430 Rot (DE)
(74) Vertreter: Kordel, Mattias
(86) Internationale Anmeldenummer: PCT/EP2017/053806
(87) Internationale Veröffentlichungsnummer: WO 2017/144418

(56) Entgegenhaltungen:
- DE-A1-102014 106 886
- JP-A- H09 309 020
- US-A1- 2015 147 127

## Beschreibung

Die Erfindung betrifft ein Fräswerkzeug.

Aus der deutschen Offenlegungsschrift DE 10 2014 106 886 A1 geht ein Fräswerkzeug gemäß dem Oberbegriff des Anspruchs 1 hervor, welches eine Mittelachse und eine Stirnseite aufweist, wobei an der Stirnseite eine Mehrzahl von geometrisch definierten Stirnschneiden angeordnet ist. Diese Stirnschneiden fallen in Richtung auf die Mittelachse in mehreren Abschnitten ab. Dies hat zur Folge, dass mit dem Fräswerkzeug ein Schrägeintauchen, das auch als "Rampen" bezeichnet wird, mit einem vergleichsweise steilen Eintauchwinkel, insbesondere von mehr als 10°, möglich ist.

Generell müssen Fräswerkzeuge, welche insbesondere zur Herstellung von Aussparungen wie Taschen oder Fenster an Werkstücken vorgesehen sind, zunächst in das zu bearbeitende Material eintauchen, bevor die eigentliche Fräsbearbeitung stattfinden kann. Da Fräswerkzeuge im eigentlichen Fräsbetrieb hohe radiale Belastungen aufnehmen müssen, weisen sie im Vergleich zu Bohrwerkzeugen kleinere Spannuten und bevorzugt mehr als zwei Schneiden auf. Gerade diese fräserspezifische geometrische Ausgestaltung verhindert aber, dass ein typisches Fräswerkzeug geeignet ist, axial in ein zu bearbeitendes Werkstück einzutauchen, wobei ein solches axiales Eintauchen auch als "Plungen" bezeichnet wird. Da Späne durch die engen Spannuten eines solchen Fräswerkzeugs nicht sicher abgeführt werden können, entstehen ein Spänestau und damit zu hohe Kräfte, sodass die empfindlichen Stirnschneiden ausbrechen können, oder wobei sogar das komplette Fräswerkzeug brechen kann. Typischerweise wird daher auf ein Plungen vollständig verzichtet, und das Fräswerkzeug taucht schräg unter einer Rampe in das Werkstück ein, was - wie bereits ausgeführt - als Rampen bezeichnet wird. Dabei bearbeiten die Stirnschneiden des Fräswerkzeugs gemeinsam mit den Umfangsschneiden das Werkstück, wobei an den Umfangsschneiden insbesondere die volle Spanungsdicke, das heißt der volle Vorschub je Zahn, anliegen kann, während an den Stirnschneiden - abhängig von dem Eintauchwinkel - eine wesentlich geringere Spanungsdicke anliegt. Beim Rampen mit flachen Eintauchwinkeln ergeben sich aber neben sehr langen Spänen vor allem lange Prozesszeiten. Bei tiefen Aussparungen dauert es daher sehr lange, bis die geforderte Eintauchtiefe erreicht wird.

Insoweit ergibt sich eine gewisse Verbesserung in Hinblick auf das aus dem Dokument DE 10 2014 106 886 A1 bekannte Fräswerkzeug, welches jedenfalls Eintauchwinkel von mehr als 10° zulässt. Gleichwohl ist auch an diesem Werkzeug insbesondere nachteilig, dass es zum Plungen nicht geeignet ist. Es weist im Bereich des Zentrums keine Schneiden auf, sodass beim axialen Eintauchen dort angeordnetes Material des Werkstücks nicht geschnitten werden kann. Die Anwendungen auch eines solchen Fräswerkzeugs sind somit beschränkt, und ein Anwender muss so geschult werden, dass er die zulässigen Grenzen für den Eintauchwinkel nicht überschreitet. Es kommt noch hinzu, dass die konventionell vorgesehene, vormittige Anordnung der Stirnschneiden eine deutliche Reduzierung des Freigangs bewirkt, wodurch ein maximal möglicher Vorschub beim Eintauchen des Fräswerkzeugs in das zu bearbeitende Material begrenzt ist.

Der Erfindung liegt die Aufgabe zugrunde, ein Fräswerkzeug zu schaffen, welches Vorteile gegenüber dem Stand der Technik aufweist.

Die Aufgabe wird gelöst, indem ein Fräswerkzeug mit den Merkmalen des Anspruchs 1 geschaffen wird. Vorteilhafte Ausgestaltungen ergeben sich aus den Unteransprüchen.

Die Aufgabe wird insbesondere gelöst, indem ein Fräswerkzeug geschaffen wird, welches einen Grundkörper, eine Mittelachse und eine an dem Grundkörper angeordnete Stirnseite aufweist, wobei wenigstens zwei an der Stirnseite des Grundkörpers angeordnete, geometrisch definierte erste Stirnschneiden jeweils einen ersten, der Mittelachse zugewandten Schneidenabschnitt aufweisen. Dabei ist vorgesehen, dass die ersten Schneidenabschnitte der wenigstens zwei Stirnschneiden zu der Mittelachse hin ansteigend ausgebildet sind, sodass sei eine Zentrierspitze ausbilden. Es ist weiter vorgesehen, dass die Zentrierspitze im Vergleich zu einem axial äußersten Punkt der wenigstens zwei ersten Stirnschneiden in axialer Richtung zurückgesetzt ist. Das Fräswerkzeug weist Vorteile gegenüber dem Stand der Technik auf. Insbesondere verleiht die Zentrierspitze dem Fräswerkzeug Stabilität und sehr gute Zentriereigenschaften beim axialen Eintauchen, sodass mit dem Fräswerkzeug ein Plungen möglich ist. Insbesondere da die Zentrierspitze aber axial im Vergleich zu einem äußersten Punkt der wenigstens zwei ersten Stirnschneiden zurückgesetzt angeordnet ist, ist das Fräswerkzeug auch genauso nutzbar wie bekannte Fräswerkzeuge, sodass auch ein Rampen weiterhin möglich bleibt, wobei jedoch der Eintauchwinkel nicht nach oben begrenzt ist. Es ist also quasi ein Eintauchen unter beliebigem Eintauchwinkel bis hin zum axialen Eintauchen, nämlich dem Plungen, möglich. Somit ermöglicht das Fräswerkzeug ein universelles Arbeiten mit beliebiger Vorschubrichtung vom axialen Eintauchen, über das schräge Eintauchen, bis hin zum wendelförmigen Eintauchen, Helixbohren, und konventionellem Fräsen mit jeweils hohem Leistungsniveau. Hinzu kommt, dass Späne im Bereich der Zentrierspitze wesentlich günstiger geformt und gebrochen werden, als dies bei bekannten Geometrien für Fräswerkzeuge der Fall ist. Dass die Zentrierspitze axial zurückgesetzt angeordnet ist, hat auch zur Folge, dass diese im regulären Betrieb insbesondere des Taschenfräsens oder Nutfräsens nicht mit einem Boden der gefertigten Tasche oder Nut in Kontakt kommt, sodass dieser mit hoher Oberflächenqualität und ohne irgendwelche Störkonturen gefertigt werden kann.

Das Fräswerkzeug ist in bevorzugter Ausgestaltung als Taschenfräser ausgebildet, also eingerichtet zum Taschenfräsen. Alternativ oder zusätzlich ist das Fräswerkzeug bevorzugt eingerichtet zum Nutfräsen und/oder zum Fensterfräsen. Dabei wird unter einer Tasche insbesondere eine in eine Oberfläche eines Werkstücks eingebrachte Aussparung verstanden, die eine beliebige Geometrie - insbesondere mit beliebiger Umrandung - aufweisen kann, wobei die Aussparung einen Boden aufweist. Unter einem Fenster wird demgegenüber eine in eine Oberfläche eines Werkstücks eingebrachte Aussparung verstanden, welche ebenfalls eine beliebige Geometrie mit insbesondere beliebiger Umrandung aufweisen kann, jedoch keinen Boden aufweist und insbesondere als durchgehende Aussparung ausgebildet ist, welche das Werkstück durchgreift. Unter einer Nut wird wiederum eine in eine Oberfläche eines Werkstücks eingebrachte Aussparung verstanden, welche eine erste Erstreckung entlang einer Richtung aufweist, die wesentlich größer ist als eine zweite Erstreckung in einer anderen, auf der ersten Richtung senkrecht stehenden Richtung, wobei die erste Erstreckung insbesondere ein Vielfaches der zweiten Erstreckung beträgt. Eine Nut weist insbesondere eine Länge auf, die größer ist als ihre Breite. Vorzugsweise weist eine Nut einen Boden auf.

Unter einer Mittelachse des Fräswerkzeugs wird eine Achse verstanden, bezüglich derer das Fräswerkzeug eine insbesondere mehrzählige Drehsymmetrie aufweist, wobei die Mittelachse zugleich eine Achse darstellt, um welche das Fräswerkzeug beim Fräsen bestimmungsgemäß gedreht wird.

Unter einer Stirnseite wird eine Seite des Fräswerkzeugs verstanden, die beim Fräsen bestimmungsgemäß einem zu bearbeitenden Werkstück zugewandt ist und welche im Fräsbetrieb gegebenenfalls insbesondere einen Boden einer entstehenden Aussparung des Werkstücks bearbeitet.

Unter einer geometrisch definierten Schneide wird insbesondere eine Schneide verstanden, welche als Schneidkante ausgebildet ist und eine definierte geometrische Form und/oder Erstreckung aufweist, insbesondere in Abgrenzung von einer geometrisch undefinierten Schneide, wie sie beispielsweise an einem Schleifkorn ausgebildet ist.

Unter einer axialen Richtung wird allgemein eine Richtung verstanden, die sich parallel zu der Mittelachse erstreckt. Unter einer radialen Richtung wird eine Richtung verstanden, die senkrecht auf der Mittelachse steht und die Mittelachse schneidet. Unter einer Umfangsrichtung wird eine Richtung verstanden, welche die Mittelachse - insbesondere konzentrisch - umgreift.

Dass die ersten Schneidenabschnitte zu der Mittelachse hin ansteigend ausgebildet sind, bedeutet insbesondere, dass diese entlang ihres Verlaufs radial nach innen auf die Mittelachse zu in axialer Richtung ansteigen, das heißt bei bestimmungsgemäßer Anordnung des Fräswerkzeugs relativ zu einem Werkstück zu dem Werkstück hin geneigt sind. Die zur Mittelachse hin ansteigenden ersten Schneidenabschnitte bilden also eine Erhebung aus, nämlich die Zentrierspitze.

Dass diese im Vergleich zu einem axial äußersten Punkt der wenigstens zwei ersten Stirnschneiden in axialer Richtung zurückgesetzt ist, bedeutet insbesondere, dass sie - entlang der Mittelachse gesehen - bei bestimmungsgemäßer Anordnung des Fräswerkzeugs relativ zu einem Werkstück weiter von einer Werkstückoberfläche entfernt angeordnet ist, als der axial äußerste Punt der wenigstens zwei ersten Stirnschneiden. Der axial äußerste Punkt der wenigstens zwei ersten Stirnschneiden stellt dabei bevorzugt insbesondere einen Punkt dar, der an dem Grundkörper des Fräswerkzeugs axial am weitesten in Richtung auf ein zu bearbeitendes Werkstück vorsteht. Insbesondere ist die Zentrierspitze vorzugsweise mit ihrem lokal höchsten Punkt axial zurückgesetzt angeordnet im Vergleich zu dem axial äußersten Punkt der wenigstens zwei ersten Stirnschneiden. Das Fräswerkzeug weist somit bevorzugt eine Aussparung oder Einbuchtung an der Stirnseite auf, in welcher die Zentrierspitze - quasi versenkt - angeordnet ist.

Bevorzugt ist die Zentrierspitze im Vergleich zu einer axial äußersten Umfangslinie des Grundkörpers in axialer Richtung zurückgesetzt. Dabei ist es möglich, dass der axial äußerste Punkt der zwei ersten Stirnschneiden auf der axial äußersten Umfangslinie des Grundkörpers angeordnet ist.

Vorzugsweise ist die Stirnseite des Fräswerkzeugs insgesamt konkav ausgebildet, wobei sie die zuvor bereits erwähnte Aussparung oder Einbuchtung aufweist, in welcher die Zentrierspitze - insbesondere quasi versenkt - angeordnet ist.

Vorzugsweise weist das Fräswerkzeug einen Schaftabschnitt auf, mit dem es beispielsweise in ein Futter einer Werkezugmaschine eingespannt werden kann. Der Begriff "Ansteigen" bezieht sich dann insbesondere auf eine Richtung von dem Schaftabschnitt weg und zu der Stirnseite hin, während der Begriff "zurückgesetzt" sich insbesondere auf eine Richtung von der Stirnseite weg zu dem Schaftabschnitt hin bezieht.

Die ersten Stirnschneiden weisen vorzugsweise jeweils einen zweiten Schneidenabschnitt auf, der radial außerhalb - also weiter zu einem äußeren Umfang des Grundkörpers hin - von den ersten Schneidenabschnitten angeordnet ist. Die ersten Schneidenabschnitte sind also im Vergleich zu den zweiten Schneidenabschnitten radial innen angeordnet, während die zweiten Schneidenabschnitte relativ zu den ersten Schneidenabschnitten radial außen angeordnet sind.

Die ersten Schneidenabschnitte erstrecken sich bevorzugt radial bis auf die Höhe der Mittelachse, also bis zu einem Zentrum des Fräswerkzeugs.

Gemäß einer Weiterbildung der Erfindung ist vorgesehen, dass die zweiten, der Mittelachse abgewandten Schneidenabschnitte der ersten Stirnschneiden in Richtung auf eine gedachte Umfangslinie des Grundkörpers hin ansteigen. Dies bedeutet umgekehrt, dass die zweiten Schneidenabschnitte zu der Mittelachse hin abfallend ausgebildet sind. Dies ergibt insgesamt - zusammen mit dem zur Mittelachse ansteigenden Verlauf der ersten Schneidenabschnitte - eine konkave Ausgestaltung der Stirnseite, wobei die Aussparung oder Einbuchtung, in welcher die Zentrierspitze angeordnet ist, durch den zu der Mittelachse abfallenden Verlauf der zweiten Schneidenabschnitte gebildet wird. Im radialen Verlauf der ersten Stirnschneiden ergibt sich insbesondere - in axialer Richtung gesehen - ein Minimum in einem Übergangsbereich zwischen den ersten Schneidenabschnitten und den zweiten Schneidenabschnitten, in welchem diese vorzugsweise - in radialer Richtung zur Mittelachse hin gesehen - von dem abfallenden Verlauf der zweiten Schneidenabschnitte umkehren und weiter zur Mittelachse hin im Bereich der ersten Schneidenabschnitte ansteigen.

Gemäß einer Weiterbildung der Erfindung ist vorgesehen, dass die zweiten Schneidenabschnitte bogenförmig konvex in Richtung auf die gedachte Umfangslinie hin ansteigen. Vorzugsweise wird dabei ein Winkel, welchen die zweiten Schneidenabschnitte mit der Mittelachse einschließen, zur Mittelachse hin stetig kleiner. Es ergibt sich also ein bogenförmig gekrümmter Schneidenverlauf, was insbesondere beim schrägen Eintauchen, mithin beim Rampen, eine Unterbrechung der Spanbildung bewirkt und somit für kurze Späne sorgt, die leicht abtransportiert werden können. Ein Spänestau kann somit vermieden werden. Darüber hinaus können Schneidecken des Fräswerkzeugs gegenüber einem konventionellen Hohlschliff der Stirnseite mit geraden Schneidenverläufen, sehr stabil ausgestaltet werden, da der bogenförmige Verlauf eine - in axialer Richtung gemessene - Überhöhung der Stirnschneiden im Bereich der Schneidecken im Vergleich zu einer linearen Geometrie erlaubt.

Die Zentrierspitze ist vorzugsweise - in axialer Richtung gesehen - auch gegenüber den Schneidecken der ersten Stirnschneiden, vorzugsweise gegenüber den Schneidecken aller Stirnschneiden des Fräswerkzeugs, zurückgesetzt. Dabei sind die Schneidecken insbesondere die radial äußersten, also von der Mittelachse am weitesten entfernt angeordneten Punkte oder Bereiche der Stirnschneiden. Es ist möglich, dass die Schneidecken zugleich die axial äußersten Punkte der Stirnschneiden bilden oder aufweisen. Es ist aber auch möglich, dass die axial äußersten Punkte der Stirnschneiden - in radialer Richtung gesehen - im Vergleich zu den Schneidecken zur Mittelachse hin versetzt angeordnet sind, sodass die Stirnschneiden in den zweiten Schneidenabschnitten bereichsweise - von ihren axial äußersten Punkten aus gesehen - zu den Schneidecken hin abfallen.

Die ersten Stirnschneiden sind bevorzugt insbesondere im Bereich der zweiten Schneidenabschnitte - besonders bevorzugt aber auch insgesamt - zumindest bereichsweise derart ausgebildet, dass ihr Anstellwinkel zur Mittelachse, hier insbesondere ein Winkel zwischen einer Tangente an einen Punkt auf einer Stirnschneide und einer Durchmesserlinie des Fräswerkzeugs durch denselben Punkt, zu der Mittelachse hin stetig kleiner wird. Somit ergibt sich auch in Draufsicht auf die Stirnseite gesehen zumindest bereichsweise ein bevorzugt bogenförmiger Verlauf der ersten Stirnschneiden.

Gemäß einer Weiterbildung der Erfindung ist vorgesehen, dass die ersten Stirnschneiden in einem Übergangsbereich zwischen den ersten Schneidenabschnitten und den zweiten Schneidenabschnitten - in radialer Richtung gesehen - ein Minimum durchlaufen. Dies wurde bereits zuvor erläutert, wobei diese Ausgestaltung eine insgesamt konkave Geometrie der Stirnseite ermöglicht, wobei die Zentrierspitze in einer Aussparung oder Einbuchtung angeordnet sein kann.

Gemäß einer Weiterbildung der Erfindung ist vorgesehen, dass den ersten Schneidenabschnitten der ersten Stirnschneiden erste Spanflächen zugeordnet sind. Den zweiten Schneidenabschnitten der ersten Stirnschneiden sind zweite Spanflächen zugeordnet. Insbesondere ist einem ersten Schneidenabschnitt eine erste Spanfläche zugeordnet, wobei einem zweiten Schneidenabschnitt eine zweite Spanfläche zugeordnet ist. Die ersten Spanflächen und die zweiten Spanflächen einer ersten Stirnschneide schließen zumindest bereichsweise einen von 0° verschiedenen Winkel miteinander ein. Sie sind also insbesondere verschieden geneigt. Weist also insbesondere eine erste Stirnschneide der beiden ersten Stirnschneiden einen ersten Schneidenabschnitt mit einer ersten Spanfläche und einen zweiten Schneidenabschnitt mit einer zweiten Spanfläche auf, so schließen diese erste Spanfläche und diese zweite Spanfläche zumindest bereichsweise einen von 0° verschiedenen Winkel miteinander ein. Dies gilt genauso bevorzugt auch für eine zweite erste Stirnschneide der wenigstens zwei ersten Stirnschneiden. Besonders bevorzugt gilt dies für jede erste Stirnschneide des Fräswerkzeugs. Diese geometrische Ausgestaltung wird bevorzugt insbesondere dadurch bewirkt, dass die ersten Spanflächen und die zweiten Spanflächen durch voneinander unabhängige Ausspitzungen gebildet werden. Besonders bevorzugt ist vorgesehen, dass die Zentrierspitze mit den ersten Spanflächen durch eine bohrerartige Ausspitzung gebildet ist, wobei die zweiten Spanflächen der zweiten Schneidenabschnitte durch hiervon separate, unabhängige Ausspitzungen erzeugt werden. Die Zentrierspitze entspricht bevorzugt den grundsätzlich bekannten und in Hinblick auf die stabilisierende Wirkung und ihre Zentriereigenschaften bewährten Bohrerspitzen.

Gemäß einer Weiterbildung der Erfindung ist vorgesehen, dass wenigstens ein zweiter Schneidenabschnitt der zweiten Schneidenabschnitte der ersten Stirnschneiden - in Draufsicht auf die Stirnseite gesehen - eine Untermittestellung aufweist. Dieser ist also insbesondere im Vergleich zu einer gedachten Durchmesserlinie des Fräswerkzeugs, die sich im Wesentlichen parallel zu dem Verlauf des zweiten Schneidenabschnitts erstreckt, entgegen einer bestimmungsgemäßen Drehrichtung des Fräswerkzeugs - in Umfangsrichtung gesehen - zurückgesetzt. Die Untermittestellung ermöglicht - insbesondere im Vergleich zu der im Stand der Technik vorgesehenen Vormittestellung - einen vergrößerten Freigang, was eine wesentliche Voraussetzung darstellt, um hohe Vorschubwerte für das Fräswerkzeug zu erreichen. Vorzugsweise weisen alle zweiten Schneidenabschnitte der ersten Stirnschneiden eine solche Untermittestellung auf.

Gemäß einer bevorzugten Ausgestaltung ist vorgesehen, dass die Untermittestellung von mindestens 0,2 % bis höchstens 2 %, vorzugsweise von mindestens 0,5 % bis höchstens 1,5 % des Durchmessers des Fräswerkzeugs im Bereich der Stirnseite - insbesondere gemessen als Durchmesser eines Flugkreises der Schneidecken - beträgt.

Gemäß einer Weiterbildung der Erfindung ist vorgesehen, dass wenigstens eine der wenigstens zwei ersten Stirnschneiden in eine an einem Umfang des Grundkörpers angeordnete Umfangsschneide übergeht. Es ist also bevorzugt dieser ersten Stirnschneide eine Umfangsschneide zugeordnet, in welche diese - insbesondere im Bereich einer Schneidecke - übergeht. Die Umfangsschneide ist insbesondere als geometrisch definierte Schneiden ausgebildet. Vorzugsweise ist jeder ersten Stirnschneide in entsprechender Weise eine Umfangsschneide zugeordnet.

Gemäß einer Weiterbildung der Erfindung ist vorgesehen, dass die wenigstens erste Stirnschneide über einen bogenförmigen Verlauf in die ihr zugeordnete Umfangsschneide übergeht. Bevorzugt weist jede erste Stirnschneide im Bereich des Übergangs in die ihr zugeordnete Umfangsschneide einen bogenförmigen Verlauf auf. Dabei ist ein bogenförmiger Verlauf insbesondere ein gekrümmter Verlauf. Vorzugsweise weisen die ersten Stirnschneiden und die ihren zugeordneten Umfangsschneiden jeweils eine durchgehende Schneidenkante auf, welche ununterbrochen entlang der Stirnschneide über den Übergangsbereich in die Umfangsschneide übergeht und dort entlang der Umfangsschneide verläuft. Dabei weist die Schneidenkante im Übergangsbereich zwischen der Stirnschneide und der Umfangsschneide einen gekrümmten Verlauf auf. Insbesondere ist im Übergangsbereich zwischen der Stirnschneide und der Umfangsschneide wenigstens ein Radius vorgesehen. Es ist möglich, dass eine Mehrzahl von Radien im Übergangsbereich vorgesehen ist. Insbesondere ist es möglich, dass ein Radienverlauf derart vorgesehen ist, dass der Krümmungsverlauf der Schneidenkante sich in dem Übergangsbereich - vorzugsweise stetig - verändert. Der gekrümmte Verlauf der Schneidenkanten im Bereich der Schneidecken führt zu einer weiteren Verbesserung der ohnehin schon hohen Grundstabilität der Schneidecken, die insbesondere durch den bogenförmig konvexen Verlauf der zweiten Schneidenabschnitte erreicht wird.

Ein höchster Punkt der Zentrierspitze ist axial bevorzugt insbesondere gegenüber einem axial höchsten Punkt des Übergangsbereichs zwischen einer ersten Stirnschneide und der ihr zugeordneten Umfangsschneide zurückgesetzt.

Gemäß einer Weiterbildung der Erfindung ist vorgesehen, dass am Umfang des Grundkörpers mehr als zwei Umfangsschneiden angeordnet sind. Es ist grundsätzlich möglich, dass jeder Umfangsschneide eine erste Stirnschneide zugeordnet ist.

Es wird aber auch eine Ausgestaltung bevorzugt, bei der vorgesehen ist, dass an der Stirnseite des Grundkörpers wenigstens eine zweite, geometrisch definierte Stirnschneide vorgesehen ist, die in eine der Umfangsschneiden übergeht, wobei die wenigstens eine zweite Stirnschneide in einem zweiten Schneidenabschnitt endet. Dies bedeutet insbesondere, dass die zweite Stirnschneide vor Erreichen des radial inneren Bereichs der ersten Schneidenabschnitte der wenigstens zwei ersten Stirnschneiden endet. Sie weist also insbesondere keinen ersten Schneidenabschnitt auf, sondern lediglich einen radial äußeren, zweiten Schneidenabschnitt. Anders ausgedrückt bedeutet dies insbesondere, dass nicht alle Umfangsschneiden des Fräswerkzeugs nach ihrem Übergang in eine Stirnschneide bis zur Mitte des Fräswerkzeugs geführt werden. Dies hat den Vorteil, dass für von den Stirnschneiden abgetragene Späne - insbesondere beim Plungen - mehr Raum im Bereich der Stirnseite zur Verfügung steht. Zugleich kann das Fräswerkzeug - wie bei Fräsanwendungen typischerweise vorgesehen - eine Zahl von Umfangsschneiden aufweisen, die deutlich größer ist als zwei, ohne dass dies im Bereich der Stirnseite dazu führt, dass zu wenig Raum für dort abgetragene Späne gegeben ist.

Gemäß einer Weiterbildung der Erfindung ist vorgesehen, dass das Fräswerkzeug mindestens vier Umfangsschneiden und genau zwei erste Stirnschneiden aufweist. Es ist auch möglich, dass das Fräswerkzeug mindestens vier Umfangsschneiden und genau drei erste Stirnschneiden aufweist. Wie bereits ausgeführt, geht bevorzugt jede Umfangsschneide des Fräswerkzeugs in eine Stirnschneide über, wobei jedoch nicht alle Stirnschneiden als erste Stirnschneiden ausgebildet sind, sondern vielmehr eine bestimmte Zahl an Stirnschneiden als zweite Stirnschneiden ausgebildet sein kann, wobei die zweiten Stirnschneiden keinen ersten Schneidenabschnitt aufweisen, sondern vielmehr in dem zweiten Schneidenabschnitt enden. Nur eine Unterauswahl aller jeweils einer Umfangsschneide zugeordneten Stirnschneiden wird dann bis zur Mitte des Fräswerkzeugs geführt und weist einen ersten Schneidenabschnitt auf, ist also als erste Stirnschneide ausgebildet.

Besonders bevorzugt wird ein Ausführungsbeispiel des Fräswerkzeugs, bei welchem genau vier Umfangsschneiden vorgesehen sind. Es wird auch ein Ausführungsbeispiel des Fräswerkzeugs bevorzugt, bei welchem genau fünf Umfangsschneiden vorgesehen sind. Es wird auch ein Ausführungsbeispiel des Fräswerkzeugs bevorzugt, bei welchem genau sechs Umfangsschneiden vorgesehen sind. Insbesondere wird ein Ausführungsbeispiel des Fräswerkzeugs bevorzugt, bei welchem genau vier Umfangsschneiden vorgesehen sind, wobei das Fräswerkzeug genau zwei erste Stirnschneiden aufweist. Jede der vier Umfangsschneiden geht in eine Stirnschneide über, von denen jedoch nur zwei Stirnschneiden als erste Stirnschneiden ausgebildet sind. Die verbleibenden zwei Stirnschneiden sind dann als zweite Stirnschneiden ausgebildet. Es wird auch ein Ausführungsbeispiel des Fräswerkzeugs bevorzugt, bei welchem genau fünf Umfangsschneiden vorgesehen sind, wobei genau zwei erste Stirnschneiden vorgesehen sind. In diesem Fall sind entsprechend drei zweite Stirnschneiden vorgesehen. Es wird auch ein Ausführungsbeispiel des Fräswerkzeugs bevorzugt, bei welchem genau sechs Umfangsschneiden vorgesehen sind. Bei diesem Ausführungsbeispiel sind genau drei erste Stirnschneiden vorgesehen, sodass die verbleibenden drei Stirnschneiden als zweite Stirnschneiden ausgebildet sind. Es wird auch ein Ausführungsbeispiel des Fräswerkzeugs bevorzugt, bei welchem genau drei Umfangsschneiden vorgesehen sind, wobei jeder Umfangsschneide eine erste Stirnschneide zugeordnet ist, sodass genau drei erste Stirnschneiden vorgesehen sind, wobei das Fräswerkzeug keine zweite Stirnschneide aufweist.

Wie bereits ausgeführt, geht bevorzugt jede Umfangsschneide in eine Stirnschneide über, wobei bevorzugt jeder Übergang von einer Umfangsschneide in eine Stirnschneide - oder umgekehrt von einer Stirnschneide in eine Umfangsschneide - einen bogenförmigen Verlauf und insbesondere wenigstens einen Radius am Übergang aufweist. Dies gilt insbesondere unabhängig davon, ob die einer Umfangsschneide zugeordnete Stirnschneide als erste Stirnschneide oder als zweite Stirnschneide ausgebildet ist.

Gemäß einer Weiterbildung der Erfindung ist vorgesehen, dass wenigstens einer der ersten Schneidenabschnitte der wenigstens zwei ersten Stirnschneiden, vorzugsweise alle ersten Schneidenabschnitte - in Draufsicht gesehen - eine Vormittestellung aufweist/aufweisen. Demnach weist also insbesondere ein erster Schneidenabschnitt der ersten Stirnschneiden, welche die Zentrierspitze bilden, eine Vormittestellung auf. Er eilt also - in Umdrehungsrichtung des Fräswerkzeugs gesehen - einer zumindest im Wesentlichen parallel zu dem ersten Schneidenabschnitt ausgerichteten Durchmesserlinie des Fräswerkzeugs vor. Dies erweist sich als für die Zerspanungseigenschaften des Fräswerkzeugs im Bereich der Zentrierspitze, insbesondere beim Plungen, als günstig.

Die Vormittestellung des wenigstens einen ersten Schneidenabschnitts beträgt vorzugsweise von mindestens 0,5 % bis höchstens 4 %, besonders bevorzugt von mindestens 1 % bis höchstens 3 % des Durchmessers des Fräswerkzeugs im Bereich der Stirnseite, insbesondere des Durchmessers eines durch die Schneidecken definierten Flugkreises.

Gemäß einer Weiterbildung der Erfindung ist vorgesehen, dass den Stirnschneiden - insbesondere sowohl den ersten Stirnschneiden als auch den zweiten Stirnschneiden - jeweils eine Spannut zugeordnet ist, wobei ein - senkrecht zur Mittelachse gemessener - Querschnitt wenigstens einer der Spannuten - vorzugsweise aller Spannuten - im Bereich der Stirnseite größer ist als in einem der Stirnseite abgewandten Bereich des Fräswerkzeugs. Ein der Stirnseite abgewandter Bereich des Fräswerkzeugs ist insbesondere ein dem Schaftabschnitt des Fräswerkzeugs zugewandter Bereich. Dadurch, dass die Spannuten im Bereich der Stirnseite bevorzugt größer ausgebildet werden als in dem der Stirnseite abgewandten Bereich, können diese - insbesondere beim Plungen - dort abgetragene Späne leichter aufnehmen und abtransportieren, ohne dass ein Spänestau zu befürchten ist. Dabei ist es insbesondere möglich, den Querschnitt der Spannuten im Bereich der Stirnseite größer auszubilden, als dies bei konventionellen Fräswerkzeugen der Fall ist.

Es ist möglich, dass der Querschnitt der Spannuten im Verlauf derselben von dem stirnseitigen Bereich zu dem der Stirnseite abgewandten Bereich hin einen unstetigen und/oder nichtdifferenzierbaren Verlauf, insbesondere eine Stufe oder einen Knick, aufweist. Besonders bevorzugt verringert sich der Querschnitt mit zunehmendem Abstand zur Stirnseite, weist also einen vom Abstand zur Stirnseite abhängigen Querschnittsverlauf auf, der gestuft, besonders bevorzugt aber kontinuierlich ausgebildet sein kann. Insbesondere verringert sich der Querschnitt mit dem Abstand zur Stirnseite bevorzugt stetig. Ein solcher Querschnittsverlauf der Spannuten wird auch als Kernanstieg bezeichnet.

Gemäß einer Weiterbildung der Erfindung ist vorgesehen, dass die Umfangsschneiden an dem Grundkörper mit ungleichen Teilungswinkeln angeordnet sind. Dies bedeutet, dass die Umfangsschneiden - in Umfangsrichtung gesehen - zueinander verschiedene Winkelabstände aufweisen, also nicht symmetrisch entlang des Umfangs verteilt sind. Hierdurch können Vibrationen und Ratterschwingungen bei der Fräsbearbeitung gedämpft, vorzugsweise vermieden werden.

Gemäß einer Weiterbildung der Erfindung ist vorgesehen, dass zumindest zwei der Umfangsschneiden ungleiche Drallwinkel aufweisen. Vorzugsweise verlaufen die Umfangsschneiden entlang von Schraubenlinien mit einem bestimmten Drallwinkel, wobei dieser Drallwinkel für wenigstens zwei der Umfangsschneiden verschieden gewählt ist. Es ist möglich, dass mehr als zwei Umfangsschneiden verschiedene Drallwinkel aufweisen. Insbesondere ist es möglich, dass keine zwei Umfangsschneiden einen gleichen Drallwinkel aufweisen, wobei dann insbesondere alle Drallwinkel der Umfangsschneiden paarweise verschieden sind. Die Wahl ungleicher Drallwinkel für die Umfangsschneiden ermöglicht ebenfalls eine Dämpfung oder sogar Vermeidung von Vibrationen und Ratterschwingungen bei der Fräsbearbeitung.

Es wird hervorgehoben, dass gemäß einer bevorzugten Ausgestaltung des Fräswerkzeugs die zweiten Stirnschneiden zumindest bezüglich eines Merkmals, bevorzugt bezüglich aller zuvor beschriebenen Merkmale so ausgestaltet sind, wie dies für die ersten Stirnschneiden mit Bezug auf den zweiten Schneidenabschnitt beschrieben wurde. Dies gilt ganz besonders für den bogenförmig konvex verlaufenden Anstieg zu der gedachten Umfangslinie des Grundkörpers hin, wie auch für den stetig zur Mittelachse kleiner werdenden Anstellwinkel, der - in Draufsicht auf die Stirnseite gesehen - zu einem zumindest bereichsweise bogenförmigen Verlauf der zweiten Stirnschneiden führt. Auch weisen insbesondere bevorzugt auch die zweiten Stirnschneiden eine Untermittestellung auf.

Unter einer Fräsbearbeitung wird im Übrigen insbesondere die Bearbeitung eines Werkstücks verstanden, bei welcher das Fräswerkzeug um seine Mittelachse gedreht und relativ zu dem Werkstück senkrecht zu seiner Mittelachse verlagert wird. Dabei kommt es nicht darauf an, ob das Fräswerkzeug verlagert wird, wobei das Werkstück raumfest angeordnet ist, oder ob das Werkstück verlagert wird, wobei das Fräswerkzeug raumfest angeordnet ist, oder ob sowohl das Fräswerkzeug als auch das Werkstück senkrecht zur Mittelachse verlagert werden. Alle diese Kombinationen von Verlagerung sind möglich. Wichtig ist letztlich lediglich, dass eine Relativverlagerung zwischen dem Werkstück und dem Fräswerkzeug bewirkt wird, die senkrecht zur Mittelachse des Fräswerkzeugs verläuft. Das initiale Eintauchen des Fräswerkzeugs in das Werkstück - sei es durch Plungen, durch Rampen, oder in anderer geeigneter Weise - dient dabei dazu, das Fräswerkzeug in eine geeignete Bearbeitungsposition für die nachfolgende Fräsbearbeitung zu bringen, um beispielsweise eine Tasche oder ein Fenster an dem Werkstück auszubilden. Die eigentliche Fräsbearbeitung erfolgt dann bevorzugt ohne axiale Verlagerung des Fräswerkzeugs relativ zu dem Werkstück, sondern vielmehr ausschließlich durch die beschriebene Relativverlagerung senkrecht zur Mittelachse. Dies unterscheidet die Fräsbearbeitung insbesondere von einer Bohrbearbeitung. Das hier vorgeschlagene Fräswerkzeug ist insbesondere spezifisch eingerichtet zur Fräsbearbeitung von Werkstücken.

Die Erfindung wird im Folgenden anhand der Zeichnung näher erläutert. Dabei zeigen:
- Figur 1: eine schematische Seitenansicht eines ersten Ausführungsbeispiels eines Fräswerkzeugs;
- Figur 2: eine perspektivische Ansicht des ersten Ausführungsbeispiels gemäß Figur 1;
- Figur 3: eine stirnseitige Draufsicht auf das Ausführungsbeispiel gemäß den Figuren 1 und 2;
- Figur 4: eine Seitenansicht eines zweiten Ausführungsbeispiels des Fräswerkzeugs;
- Figur 5: eine perspektivische Ansicht des zweiten Ausführungsbeispiels gemäß Figur 4, und
- Figur 6: eine stirnseitige Draufsicht auf das zweite Ausführungsbeispiel gemäß den Figuren 4 und 5.

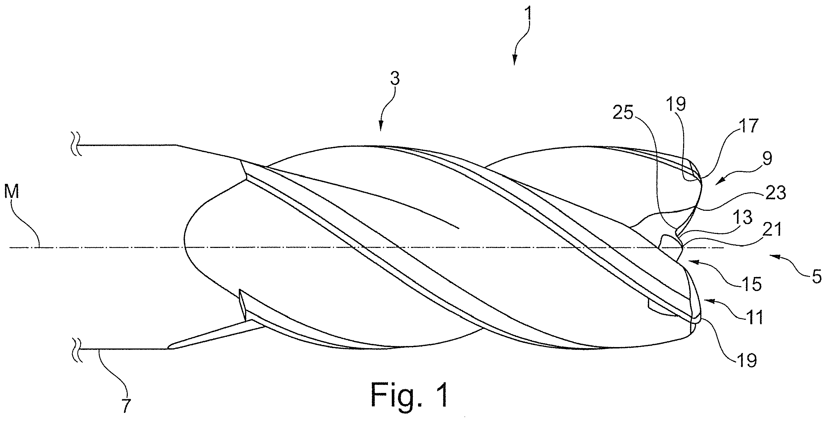

**Fig. 1** zeigt eine Seitenansicht eines ersten Ausführungsbeispiels eines Fräswerkzeugs 1, welches spezifisch für eine Fräsbearbeitung und insbesondere zum Taschenfräsen ausgebildet ist. Das Fräswerkzeug 1 weist einen Grundkörper 3 sowie eine Mittelachse M auf, außerdem eine Stirnseite 5, die bei einer Fräsbearbeitung eines Werkstücks bestimmungsgemäß dem Werkstück zugewandt ist. Der Stirnseite 5 - entlang der Mittelachse M gesehen - abgewandt weist der Grundkörper 3 einen Schaftabschnitt 7 auf, der insbesondere zum Einspannen des Fräswerkzeugs 1 in eine Werkzeugmaschine, insbesondere in ein Spannfutter, eingerichtet ist.

Das Fräswerkzeug 1 weist an der Stirnseite 5 wenigstens zwei, hier genau zwei geometrisch definierte erste Stirnschneiden 9 auf, wobei in der Darstellung gemäß Figur 1 nur eine erste erste Stirnschneide 9 dargestellt ist, wobei die zweite erste Stirnschneide 9 verdeckt ist. Aus der Perspektive des Betrachters von Figur 1 erkennbar und daher in Figur 1 dargestellt ist eine erste zweite Stirnschneide 11, wobei das hier dargestellte Ausführungsbeispiel des Fräswerkzeugs 1 genau zwei zweite Stirnschneiden 11 aufweist, von dem jedoch die zweite zweite Stirnschneide 11 in Figur 1 nicht dargestellt, sondern vielmehr verdeckt ist. Auch die zweiten Stirnschneiden 11 sind als geometrisch definierte Schneiden ausgebildet.

Die ersten Stirnschneiden 9 weisen jeweils einen ersten, der Mittelachse M zugewandten Schneidenabschnitt 13 auf, der zu der Mittelachse M hin ansteigend ausgebildet ist, also nach radial innen, auf die Mittelachse M zu gesehen, von dem Schaftabschnitt 7 weg weist. Hierdurch ist an der Stirnseite 5 eine Zentrierspitze 15 ausgebildet. Diese Zentrierspitze 15 entspricht in ihrer Ausgestaltung insbesondere einer Bohrerspitze und ist bevorzugt durch eine bohrerartige Ausspitzung an dem Fräswerkzeug 1 erzeugt. Anders als bei einem Bohrwerkzeug ist die Zentrierspitze 15 allerdings im Vergleich zu einem axial äußersten Punkt 17 der Stirnseite 5 - in axialer Richtung gesehen - zurückgesetzt, also im Vergleich zu dem axial äußersten Punkt 17 weiter zu dem Schaftabschnitt 7 hin angeordnet. Die Stirnseite 5 weist dabei bevorzugt nicht nur einen axial äußersten Punkt 17 auf, sondern es ist vielmehr bevorzugt an jeder Schneide 9, 11 ein insbesondere auf gleicher axialer Höhe angeordneter axial äußerster Punkt 17 vorgesehen, wobei eine gedachte Umfangslinie diese axial äußersten Punkte 17 miteinander verbindet. Die Zentrierspitze 15 ist insbesondere im Vergleich zu dieser gedachten Umfangslinie zurückgesetzt. Die Zentrierspitze 15 ist außerdem bevorzugt auch gegenüber Schneidecken 19 der Stirnschneiden 9, 11 axial zurückgesetzt. Insbesondere ist ein höchster Punkt 21 der Zentrierspitze 15 bevorzugt im Vergleich zu dem axial äußersten Punkt 17 und vorzugsweise auch zu den Schneidecken 19 axial zurückgesetzt. Dadurch wird sichergestellt, dass die Zentrierspitze 15 bei der eigentlichen Fräsbearbeitung und auch gegebenenfalls bei einem schrägen Eintauchen, insbesondere einem Rampen, nicht mit dem Material eines Werkstücks in Eingriff ist. Vielmehr wird die Zentrierspitze 15 bevorzugt insbesondere beim vertikalen Eintauchen entlang der Mittelachse M, insbesondere beim Plungen, in Eingriff mit dem bearbeiteten Material eines Werkstücks gebracht, um dieses auch im Zentrum des Fräswerkzeugs 1 zerspanen zu können.

Durch die Zentrierspitze 15 ist das Fräswerkzeug 1 zum Eintauchen in ein Werkstück auch unter sehr steilen Eintauchwinkeln und insbesondere zum Plungen geeignet, wobei die Zentrierspitze 15 dem Fräswerkzeug 1 dabei eine hohe Stabilität und sehr gute Zentriereigenschaften verleiht. Außerdem werden Späne im Bereich der Zentrierspitze 15 sehr günstig geformt und gebrochen, sodass sie ohne weiteres aus diesem Bereich ausgetragen werden können. Dabei ergibt sich nicht die Gefahr eines Spänestaus und damit eines Bruchs der Stirnschneiden 9, 11 oder sogar des gesamten Fräswerkzeugs 1.

Anhand von Figur 1 wird auch deutlich, dass die Stirnseite 5 insgesamt konkav ausgebildet ist und eine Aussparung oder Einbuchtung aufweist, in welcher die Zentrierspitze 15 angeordnet ist.

Weiter wird anhand von Figur 1 auch deutlich, dass sich der erste Schneidenabschnitt 13 - in radialer Richtung gesehen - bis auf die Höhe der Mittelachse M erstreckt. Die ersten Stirnschneiden 9 weisen jeweils einen zweiten, der Mittelachse M abgewandten Schneidenabschnitt 23 auf, der in Richtung auf eine gedachte Umfangslinie des Grundkörpers 3 hin ansteigt. Dies bedeutet umgekehrt, dass der zweiten Schneidenabschnitt 23 in Richtung auf die Mittelachse M abfällt. Insbesondere verläuft der zweiten Schneidenabschnitt 23 - in radialer Richtung zu der Mittelachse M hin gesehen - in Richtung des Schaftabschnitts 7. Insbesondere steigt der zweite Schneidenabschnitt 23 bogenförmig konvex zu der gedachten Umfangslinie des Grundkörpers hin an, er weist also einen gekrümmten Verlauf auf. Insbesondere hieraus ergibt sich die insgesamt konkave Ausgestaltung der Stirnseite 5 mit der Einbuchtung, in welcher die Zentrierspitze 15 angeordnet ist. Der bogenförmige Verlauf des zweiten Schneidenabschnitts 23 führt auch dazu, dass der Bereich der Schneidecken 19 mehr Material aufweisen kann, als bei einem linear ansteigenden Verlauf, weil im Bereich der Schneidecken 19 quasi eine Überhöhung des zweiten Schneidenabschnitts 23 durch die bogenförmige Krümmung gegeben ist. Die Schneidecken 19 können daher eine hohe Stabilität aufweisen, welche durch zusätzliche Radien an den Schneidecken 19 weiter gesteigert werden kann. Der bogenförmig konvexe Verlauf der zweiten Schneidenabschnitte 23 hat zusätzlich den Vorteil, dass insbesondere beim schrägen Eintauchen, ganz besonders beim Rampen, eine Unterbrechung der Spanbildung gegeben ist, sodass kurze Späne entstehen.

Auch die zweiten Stirnschneiden 11 weisen bevorzugt einen entsprechenden, bogenförmig konvexen, zu einer gedachten Umfangslinie des Grundkörpers 3 hin ansteigenden Verlauf auf. Dabei verwirklichen sich in Zusammenhang mit den zweiten Stirnschneiden 11 insbesondere in Hinblick auf die Spanbildung und die stabile Ausgestaltung der Schneidecken 19 die gleichen Vorteile, die zuvor für die ersten Stirnschneiden 9 erläutert wurden.

Die ersten Stirnschneiden 9 durchlaufen in einem Übergangsbereich zwischen dem ersten Schneidenabschnitt 13 und dem zweiten Schneidenabschnitt 23 - in radialer Richtung gesehen - ein Minimum 25. In dem Minimum 25 kehrt insbesondere der Verlauf der ersten Stirnschneiden 9 um, wobei diese in dem Bereich des zweiten Schneidenabschnitts 23 zur Mittelachse M hin abfallen und in dem ersten Schneidenabschnitt 13 zur Mittelachse M hin ansteigen. Insbesondere die Minima 25 der ersten Stirnschneiden 9 bilden die Einbuchtung, in welcher die Zentrierspitze 15 angeordnet ist.

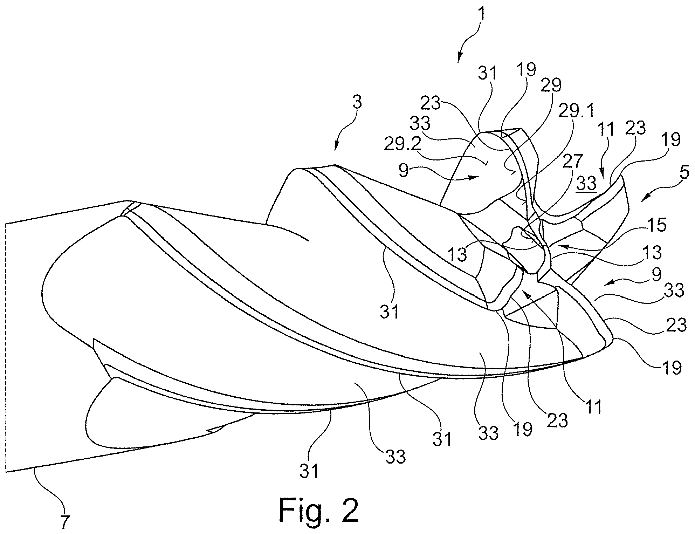

Fig. 2 zeigt eine perspektivische Ansicht des ersten Ausführungsbeispiels des Fräswerkzeugs 1 gemäß Figur 1. Gleiche und funktionsgleiche Elemente sind mit gleichen Bezugszeichen versehen, sodass insofern auf die vorangegangene Beschreibung verwiesen wird. In Figur 2 ist dargestellt, dass dem ersten Schneidenabschnitt 13 jeder ersten Stirnschneide 9 eine erste Spanfläche 27 zugeordnet ist, wobei dem zweiten Schneidenabschnitt 23 eine zweite Spanfläche 29 zugeordnet ist. Dabei schließen die erste Spanfläche 28 und die zweite Spanfläche 29 zumindest bereichsweise einen Winkel miteinander ein, der von 0° verschieden ist. Insbesondere sind die erste Spanfläche 27 und die zweite Spanfläche 29 durch separate Ausspitzungen unabhängig voneinander hergestellt. Es zeigt sich auch, dass die zweite Spanfläche 29 bei dem hier dargestellten Ausführungsbeispiel zwei Spanflächenbereiche aufweist, nämlich einen ersten Spanflächenbereich 29.1 und einen zweiten Spanflächenbereich 29.2. Dabei sind insbesondere der erste Spanflächenbereich 29.1 der zweiten Spanfläche 29 sowie die erste Spanfläche 27 jeweils durch eine Ausspitzung hergestellt, wobei diese Ausspitzungen unabhängig voneinander vorgesehen sind.

Anhand von Figur 2 zeigt sich auch, dass die zweiten Stirnschneiden 11 nur den zweiten Schneidenabschnitt 23, jedoch keinen ersten Schneidenabschnitt aufweisen. Insbesondere enden die zweiten Stirnschneiden 11 in dem zweiten Schneidenabschnitt 23 und werden insoweit nicht bis zur Mitte des Fräswerkzeugs 1 geführt. Die Zentrierspitze 15 wird somit ausschließlich von den ersten Stirnschneiden 9 gebildet. Dies verschafft im Zentrum der Stirnseite 5 mehr Raum für dort entstehende Späne.

Die Stirnschneiden 9, 11 gehen hier jeweils in am Umfang des Grundkörpers 3 angeordnete Umfangsschneiden 31 über. Dabei ist insbesondere ein bogenförmiger Verlauf für den Übergang im Bereich der Schneidecken 19 vorgesehen, mithin ein gekrümmter Verlauf, der wenigstens einen Radius aufweist. Dies führt zu einer erhöhten Stabilität im Bereich der Schneidecken 19.

Anhand von Figur 2 zeigt sich auch, dass jeder Umfangsschneide 31 eine Stirnschneide 9, 11 zugeordnet ist. Dabei ist hier allerdings nicht jeder Umfangsschneide eine erste Stirnschneide 9 zugeordnet, vielmehr sind zwei Umfangsschneiden 31 jeweils eine erste Stirnschneide 9 zugeordnet, wobei den beiden anderen Umfangsschneiden 31 jeweils eine zweite Stirnschneide 11 zugeordnet ist. Im Ergebnis werden nicht alle Umfangsschneiden 31 stirnseitig über Stirnschneiden bis zur Mitte des Fräswerkzeugs 1 geführt. Vielmehr enden manche der Umfangsschneiden 31, hier genau zwei davon, in einer Stirnschneide radial außerhalb des Zentrums des Fräswerkzeugs 1.

Es ist klar erkennbar, dass das hier dargestellte erste Ausführungsbeispiel genau vier Umfangsschneiden 31 und genau zwei erste Stirnschneiden 9 aufweist. Entsprechend weist dieses Auführungsbeispiel des Fräswerkzeugs 1 genau zwei zweite Stirnschneiden 11 auf.

Jeder Stirnschneide 9, 11 ist jeweils eine Spannut 33 zugordnet. Die Spannuten 33 weisen einen - in einer Ebene, auf welcher die Mittelachse M senkrecht steht, gemessenen - Querschnitt auf, der im Bereich der Stirnseite 5 größer ist als in einem der Stirnseite abgewandten und insbesondere dem Schaftabschnitt 7 zugewandten Bereich des Fräswerkzeugs 1. Bevorzugt weisen die Spannuten 33 einen stetigen Querschnittsverlauf auf, wobei sich der Querschnitt mit zunehmenden Abstand zur Stirnseite 5 kontinuierlich verringert. Dadurch ist es insbesondere möglich, die Spannuten 33 im Bereich der Stirnseite 5 größer auszubilden, als dies bei konventionellen Fräswerkzeugen der Fall ist, sodass hier inbesondere beim steilen Eintauchen, ganz besonders beim Plungen, Späne effizient aufgenommen und abgeführt werden können, ohne dass sich die Gefahr eines Spänestaus und eines Bruchs der Stirnschneiden 9, 11 und/oder des Fräswerkzeugs 1 ergibt. Ein solcher Querschnittverlauf der Spannuten wird auch als Kernanstieg bezeichnet.

Es zeigt sich weiterhin, dass die Spannuten 33 einen schraubenlinienförmigen, gewendelten oder spiralförmigen Verlauf aufweisen. In entsprechender Weise weisen auch die Umfangsschneiden 31 einen schraubenlinienförmigen, spiralförmigen beziehungsweise gewendelten Verlauf auf. Dabei ist bevorzugt vorgesehen, dass zumindest zwei der Umfangsschneiden 31 ungleiche Drallwinkel aufweisen. Besonders bevorzugt weisen alle Umfangsschneiden 31 paarweise verschiedene Drallwinkel auf.

Bevorzugt ist weiterhin vorgesehen, dass die Umfangsschneiden 31 an dem Grundkörper 3 mit ungleichen Teilungswinkeln angeordnet sind. Sowohl ungleiche Teilungswinkel zwischen dem Umfangsschneiden 31 als auch ungleiche Drallwinkel führen zu einer effizienten Dämpfung von Vibrationen und Ratterschwingungen bei der Fräsbearbeitung eines Werkstücks.

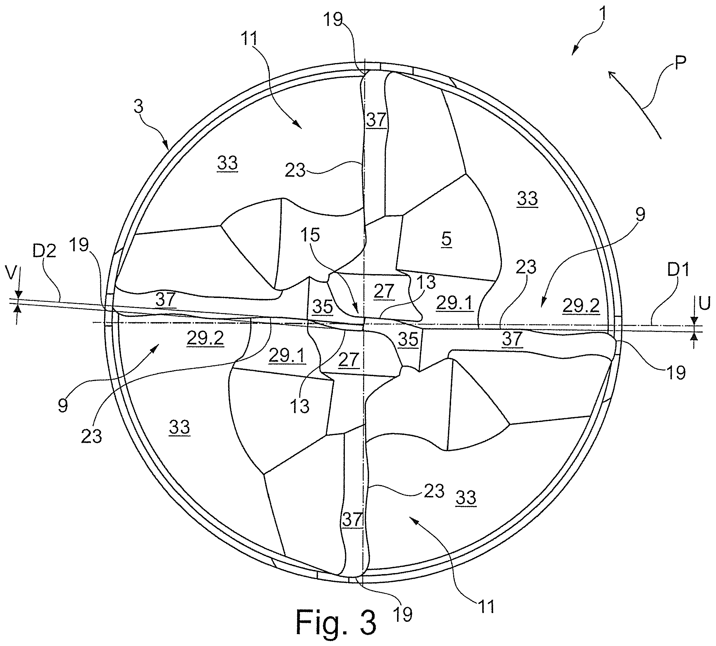

**Fig. 3** zeigt eine Draufsicht auf die Stirnseite 5 des ersten Ausführungsbeispiels des Fräswerkzeugs 1 gemäß den Figuren 1 und 2. Gleiche und funktionsgleiche Elemente sind mit gleichen Bezugszeichen versehen, sodass insofern auf die vorangegangene Beschreibung verwiesen wird. In Figur 3 ist insbesondere dargestellt, dass die zweiten Schneidenabschnitte 23 der ersten Stirnschneiden 9 - in Draufsicht auf die Stirnseite 5 gesehen - eine Untermittestellung U aufweisen, wobei sie insbesondere - in der mit einem Pfeil P dargestellten Drehrichtung des Fräswerkzeugs 1 um die Mittelachse M gesehen - einer im Wesentlichen parallel zu den zweiten Schneidenabschnitten 23 verlaufenden Durchmesserlinie D1 nacheilen, also relativ zu der Durchmesserlinie D1 - in Umfangsrichtung entgegen der Drehrichtung P gesehen - zurückgesetzt sind. Hierdurch ergibt sich ein erhöhter Freigang, wodurch hohe Vorschubwerte insbesondere beim Eintauchen des Fräswerkzeugs 1 in das Material des bearbeiteten Werkstücks und ganz besonders beim Plungen erzielbar sind.

Die Untermittestellung U beträgt vorzugsweise von mindestens 0,2 % bis höchstens 2 %, vorzugsweise von mindestens 0,5 % bis höchstens 1,5 % des Durchmessers des Fräswerkzeugs 1 im Bereich der Stirnseite 5, wobei der Durchmesser bevorzugt als Durchmesser eines Flugkreises der Schneidecken 19 gemessen wird.

Die ersten Schneidenabschnitte 13 der ersten Stirnschneiden 9 weisen - in Draufsicht auf die Stirnseite 5 gesehen - dagegen eine Vormittestellung V auf. Diese eilen dabei - in Drehrichtung P des Fräswerkzeugs 1 gesehen - einer sich im Wesentlichen parallel zu den ersten Schneidenabschnitten 13 erstreckenden zweiten Durchmesserlinie D2 vor. Die Vormittestellung beträgt vorzugsweise von mindestens 0,5 % bis höchstens 4 %, vorzugsweise von mindestens 1 % bis höchstens 3 % des Durchmessers des Fräswerkzeugs 1.

Anhand von Figur 3 zeigt sich auch noch, dass die ersten Stirnschneiden 9 insbesondere im Bereich der zweiten Schneidenabschnitte 23 - bevorzugt aber auch insgesamt - zumindest bereichsweise derart ausgebildet sind, dass ihr Anstellwinkel zur Mittelachse M, hier insbesondere ein Winkel zwischen einer Tangente an einen Punkt auf einer Stirnschneide 9 und einer Durchmesserlinie des Fräswerkzeugs 1 durch denselben Punkt, zu der Mittelachse M hin stetig kleiner wird. Somit ergibt sich auch in Draufsicht auf die Stirnseite 5 gesehen zumindest bereichsweise ein bevorzugt bogenförmiger Verlauf der ersten Stirnschneiden 9. Gleiches gilt bevorzugt auch für die zweiten Stirnschneiden 11.

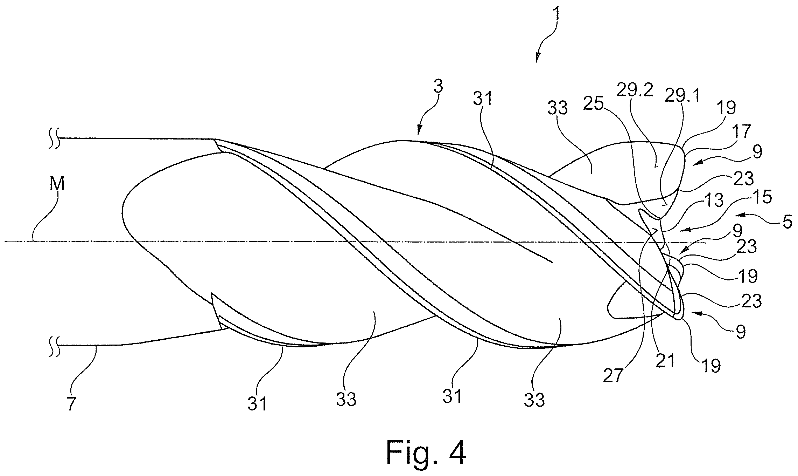

**Fig. 4** zeigt eine Seitenansicht eines zweiten Ausführungsbeispiels des Fräswerkzeugs 1. Gleiche und funktionsgleiche Elemente sind mit gleichen Bezugszeichen versehen, sodass insofern auf die vorangegangene Beschreibung verwiesen wird. Das hier dargestellte zweite Ausführungsbeispiel des Fräswerkzeugs 1 weist genau drei erste Stirnschneiden 9 auf, und keine zweite Stirnschneide. Jeder ersten Stirnschneide 9 ist eine Umfangsschneide 31 zugeordnet, wobei die ersten Stirnschneiden 9 jeweils über einen bogenförmigen Verlauf im Bereich der Schneidecken 19 in die Umfangsschneiden 31 übergehen. Die Stirnschneiden 9 weisen jeweils erste Schneidenabschnitte 13 auf, die zu der Mittelachse M hin ansteigend ausgebildet sind, sodass die Zentrierspitze 15 ausgebildet wird. Dabei wird diese hier von den drei ersten Schneidenabschnitten 13 der drei ersten Stirnschneiden 9 gebildet. Auch hier zeigt sich, dass die Zentrierspitze 15 im Vergleich zu einem axial äußersten Punkt 17 der Stirnschneiden 9 in axialer Richtung zurückgesetzt ist. Auch weisen die ersten Stirnschneiden 9 jeweils einen zweiten, der Mittelachse M abgewandten Schneidenabschnitt 23 auf, der zu einer gedachten Umfangslinie des Grundkörpers 3 hin ansteigt, wobei er insbesondere bogenförmig konvex zu der gedachten Umfangslinie hin ansteigt. Dabei weisen die ersten Stirnschneiden 9 in einen Übergangsbereich zwischen dem ersten Schneidenabschnitt 13 und dem zweiten Schneidenabschnitt 23 - in radialer Richtung gesehen - ein Minimum 25 auf, welches sie durchlaufen.

Den ersten Schneidenabschnitten 13 sind hier auch erste Spanflächen 27 zugeordnet, wobei den zweiten Schneidenabschnitten 23 zweite Spanflächen 29 zugeordnet sind, wobei die ersten Spanflächen 27 und die zweiten Spanflächen 29 jeder Stirnschneide 9 jeweils zumindest bereichsweise, insbesondere mit Blick auf einen ersten Spanflächenbereich 29.1 der zweiten Spanflächen 29, einen von 0° verschiedenen Winkel miteinander einschließen. Dabei sind auch hier vorzugsweise insbesondere die zweiten Spanflächen 27 einerseits und die ersten Spanflächenbereiche 29.1 der zweiten Spanflächen 29 durch unabhängige Ausspitzungen gebildet.

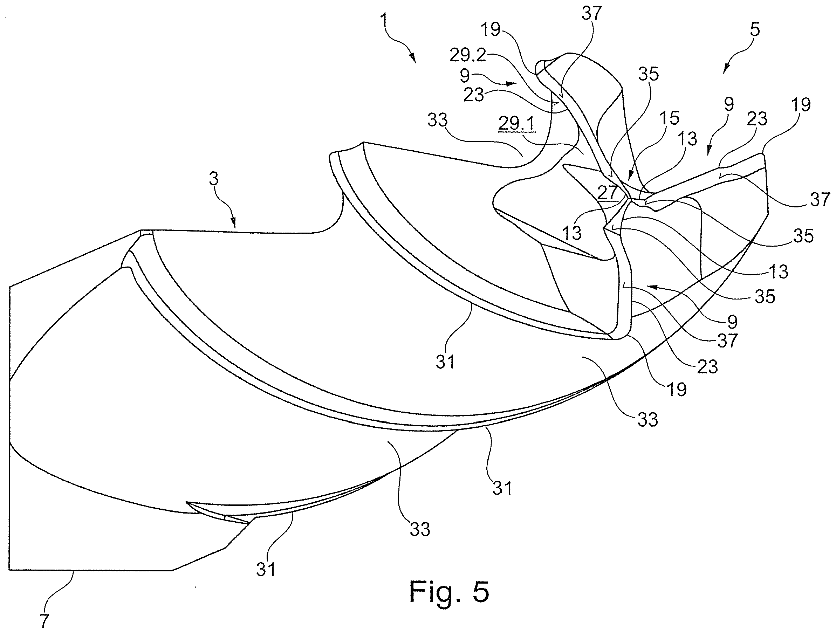

**Fig. 5** zeigt eine perspektivische Ansicht des zweiten Ausführungsbeispiels des Fräswerkzeugs 1 gemäß Figur 4. Gleiche und funktionsgleiche Elemente sind mit gleichen Bezugszeichen versehen, sodass insofern auf die vorangegangene Beschreibung verwiesen wird. In Figur 5 ist besonders deutlich erkennbar, dass dieses zweite Ausführungsbeispiel des Fräswerkzeugs 1 genau drei erste Stirnschneiden 9, jedoch keine zweite Stirnschneide 11 aufweist. Weiterhin weist das Ausführungsbeispiel genau drei Umfangsschneiden 31 auf, wobei jeder der drei ersten Stirnschneiden 9 jeweils eine der Umfangsschneiden 31 zugeordnet ist, in welche die jeweilige erste Stirnschneide 9 im Bereich der Schneidecken 19 - über einen bogenförmigen Verlauf - übergeht. Deutlich erkennbar ist auch, dass die ersten Schneidenabschnitte 13 der drei ersten Stirnschneiden 9 gemeinsam die Zentrierspitze 15 ausbilden.

Dargestellt sind hier im Übrigen auch noch den ersten Schneidenabschnitten 13 zugeordnete Freiflächen 35 sowie den zweiten Schneidenabschnitten 23 zugeordnete Freiflächen 37. Selbstverständlich weist auch das erste Ausführungsbeispiel gemäß den Figuren 1 bis 3 entsprechende Freiflächen auf, die in Figur 3 dargestellt sind. Es wird auch hervorgehoben, dass selbstverständlich auch den zweiten Stirnschneiden 11 bei beiden Ausführungsbeispielen entsprechende Freiflächen 37 zugeordnet sind.

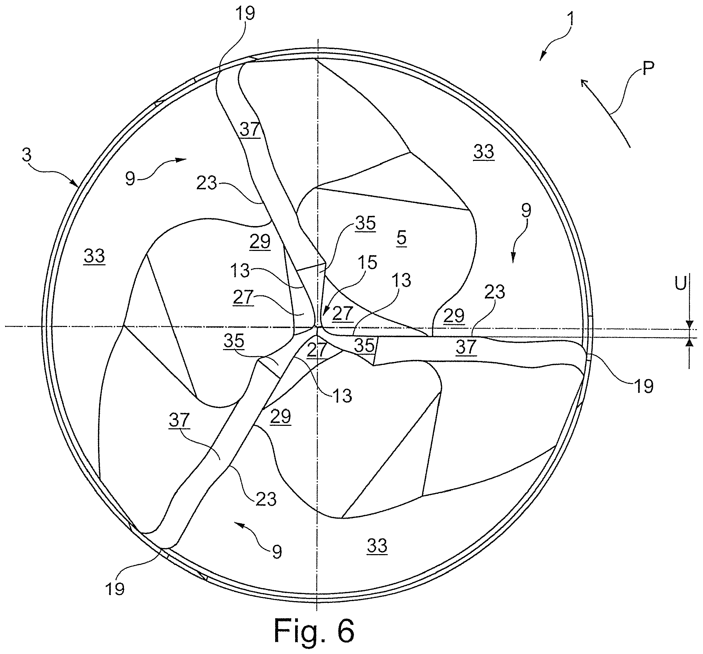

**Fig. 6** zeigt eine Draufsicht auf die Stirnseite 5 des zweiten Ausführungsbeispiels des Fräswerkzeugs 1 gemäß den Figuren 4 und 5. Gleiche und funktionsgleiche Elemente sind mit gleichen Bezugszeichen versehen, sodass insofern auf die vorangegangene Beschreibung verwiesen wird. Dabei ist hier insbesondere die Untermittestellung U der zweiten Schneidenabschnitte 23 der ersten Stirnschneiden 9 dargestellt.

Insgesamt zeigt sich, dass mit dem hier vorgeschlagenen Fräswerkzeug 1 ein universelles Arbeiten mit verschiedenen Vorschubrichtungen - insbesondere vom axialen Eintauchen, insbesondere einem sogenannten Plungen, über das schräge Eintauchen, insbesondere einem sogenannten Rampen, das wendelförmige Eintauchen, einem Helixbohren bis hin zum konventionellen Fräsen - jeweils mit hohem Leistungsniveau möglich ist. Dabei sorgt insbesondere die hier vorgesehene und axial zurückgesetzte Zentrierspitze 15 für eine sehr gute Stabilität und sehr gute Zentriereigenschaften beim axialen Eintauchen. Zugleich wird ein Eingriff der Zentrierspitze 15 durch deren axial zurückgesetzte Anordnung beim schrägen Eintauchen, insbesondere beim Rampen, sowie beim konventionellen Fräsbearbeiten eines Werkstücks vermieden.

## Patentansprüche

1. Fräswerkzeug (1) mit
- einem Grundkörper (3), einer Mittelachse (M) und einer Stirnseite (5), wobei
- wenigstens zwei an der Stirnseite (5) des Grundkörpers (3) angeordnete, geometrisch definierte erste Stirnschneiden (9) jeweils einen ersten, der Mittelachse (M) zugewandten Schneidenabschnitt (13) aufweisen,
**dadurch gekennzeichnet, dass**
- die ersten Schneidenabschnitte (13) der wenigsten zwei Stirnschneiden (9) zu der Mittelachse (M) hin ansteigend ausgebildet sind, sodass sie eine Zentrierspitze (15) bilden, und dass
- die Zentrierspitze (15) im Vergleich zu einem axial äußersten Punkt (17) der wenigstens zwei ersten Stirnschneiden (9) in axialer Richtung zurückgesetzt ist.

2. Fräswerkzeug (1) nach Anspruch 1, **dadurch gekennzeichnet, dass** die ersten Stirnschneiden (9) jeweils einen zweiten, der Mittelachse (M) abgewandten Schneidenabschnitt (23) aufweisen, der zu einer gedachten Umfangslinie des Grundkörpers (3) hin ansteigt.

3. Fräswerkzeug (1) nach einem der vorhergehenden Ansprüche, **dadurch gekennzeichnet, dass** die zweiten Schneidenabschitte (23) bogenförmig konvex zu der gedachten Umfangslinie hin ansteigen.

4. Fräswerkzeug (1) nach einem der vorhergehenden Ansprüche, **dadurch gekennzeichnet, dass** die ersten Stirnschneiden (9) in einem Übergangsbereich zwischen den ersten Schneidenabschnitten (13) und den zweiten Schneidenabschnitten (23) ein Minimum (25) durchlaufen.

5. Fräswerkzeug (1) nach einem der vorhergehenden Ansprüche, **dadurch gekennzeichnet, dass** den ersten Schneidenabschnitten (13) erste Spanflächen (27) zugeordnet sind, wobei den zweiten Schneidenabschnitten (23) zweite Spanflächen (29) zugeordnet sind, wobei die ersten Spanflächen (27) und die zweiten Spanflächen (29) jeder Stirnschneide (9) jeweils zumindest bereichsweise einen von 0° verschiedenen Winkel miteinander einschließen.

6. Fräswerkzeug (1) nach einem der vorhergehenden Ansprüche, **dadurch gekennzeichnet, dass** wenigstens ein zweiter Schneidenabschnitt (23) der Stirnschneiden (9) - in Draufsicht auf die Stirnseite (5) gesehen - eine Untermittestellung (U) aufweisen, wobei die Untermittestellung (U) vorzugsweise von mindestens 0,2 % bis höchstens 2 %, vorzugsweise von mindestens 0,5 % bis höchstens 1,5 % eines Durchmessers des Fräswerkzeugs (1) im Bereich der Stirnseite (5) beträgt.

7. Fräswerkzeug (1) nach einem der vorhergehenden Ansprüche, **dadurch gekennzeichnet, dass** wenigstens eine der wenigstens zwei ersten Stirnschneiden (9) in eine an einem Umfang des Grundkörpers (3) angeordnete Umfangsschneide (31) übergeht.

8. Fräswerkzeug (1) nach einem der vorhergehenden Ansprüche, **dadurch gekennzeichnet, dass** wenigstens eine der wenigstens zwei ersten Stirnschneiden (9) über einen bogenförmigen Verlauf in eine ihr zugeordnete Umfangsschneide (31) übergeht.

9. Fräswerkzeug (1) nach einem der vorhergehenden Ansprüche, **dadurch gekennzeichnet, dass** am Umfang des Grundkörpers (3) mehr als zwei Umfangsschneiden (31) angeordnet sind, wobei wenigstens eine zweite Stirnschneide (11), die in eine der Umfangsschneiden (31) übergeht, in einem zweiten Schneidenabschnitt (23) endet.

10. Fräswerkzeug (1) nach einem der vorhergehenden Ansprüche, **dadurch gekennzeichnet, dass** das Fräswerkzeug (1) mindestens vier Umfangsschneiden (31) und genau zwei erste Stirnschneiden (9) oder genau drei erste Stirnschneiden (9) aufweist, oder dass das Fräswerkzeug (1) genau drei Umfangsschneiden (31) und genau drei erste Stirnschneiden (9) sowie vorzugsweise keine zweite Stirnschneide (11) aufweist.

11. Fräswerkzeug (1) nach einem der vorhergehenden Ansprüche, **dadurch gekennzeichnet, dass** wenigstens einer der ersten Schneidenabschnitte (13) der wenigstens zwei ersten Stirnschneiden (9) - in Draufsicht gesehen - eine Vormittestellung (V) aufweist, wobei die Vormittestellung (V) vorzugsweise von mindestens 0,5 % bis höchstens 4 %, vorzugsweise von mindestens 1 % bis höchstens 3 % eines Durchmessers des Fräswerkzeugs (1) im Bereich der Stirnseite (5) beträgt.

12. Fräswerkzeug (1) nach einem der vorhergehenden Ansprüche, **dadurch gekennzeichnet, dass** den Stirnschneiden (9,11) jeweils eine Spannut (33) zugeordnet ist, wobei ein - senkrecht zur Mittelachse (M) gemessener - Querschnitt wenigstens einer der Spannuten (33) im Bereich der Stirnseite (5) größer ist als in einem der Stirnseite (5) abgewandten Bereich des Fräswerkzeugs (1).

13. Fräswerkzeug (1) nach einem der vorhergehenden Ansprüche, **dadurch gekennzeichnet, dass** die Umfangsschneiden (31) an dem Grundkörper (3) mit ungleichen Teilungswinkeln angeordnet sind.

14. Fräswerkzeug (1) nach einem der vorhergehenden Ansprüche, **dadurch gekennzeichnet, dass** zumindest zwei der Umfangsschneiden (31) ungleiche Drallwinkel aufweisen.

## Claims

1. Milling tool (1) having
- a base body (3), a central axis (M), and a front side (5), whereby
- at least two geometrically defined first front edges (9) arranged at the front side (5) of the base body (3) exhibit a first edge section (13) facing the central axis (M), respectively,
**characterized by**
- the first edge sections (13) of the at least two front edges (9) being formed in an ascending fashion towards the center axis (M) so that they form a centering tip (15), and that
- the centering tip (15) is arranged in a recessed manner when compared with an axial outermost point (17) of at least two first front edges (9) in an axial direction.

2. Milling tool (1) according to claim 1, **characterized by** the first front edges (9) exhibiting a second edge section (23) that is facing away from the central axis (M), respectively, which ascends to an imagined circumferential line of the base body (3).

3. Milling tool (1) according to one of the previous claims, **characterized by** the second edge sections (23) ascending in an arched and convex fashion towards the imagined circumferential line.

4. Milling tool (1) according to one of the previous claims, **characterized by** the first front edges (9) passing through a minimum (25) in a transition area between the first edge sections (13) and the second edge sections (23).

5. Milling tool (1) according to one of the previous claims, **characterized by** first cutting faces (27) being assigned to the first edge sections (13), whereby second cutting faces (29) are assigned to the second edge sections (23), whereby the first cutting faces (27) and the second cutting faces (29) of each front edge (9) comprise, respectively, between them at least in certain areas an angle that is different than 0°.

6. Milling tool (1) according to one of the previous claims, **characterized by** at least a second edge section (23) of the front edges (9) - when viewed in plan view onto the front side (5) - exhibiting a below-center position (U), whereby the below-center position (U) is preferably at least 0,2 % up to a maximum of 2 %, preferably at least 0,5 % up to a maximum of 1,5 % of a diameter of the milling tool (1) in the area of the front side (5).

7. Milling tool (1) according to one of the previous claims, **characterized by** at least one of the at least two first front edges (9) changing over into a circumferential edge (31) that is arranged at a circumference of the base body (3).

8. Milling tool (1) according to one of the previous claims, **characterized by** at least one of the at least two first front edges (9) changing over via an arched configuration in a circumferential edge (31) that is assigned to it.

9. Milling tool (1) according to one of the previous claims, **characterized by** more than two circumferential edges (31) having been arranged at the circumference of the base body (3), whereby at least a second front edge (11), which changes over in one of the circumferential edges (31), ends in a second edge section (23).

10. Milling tool (1) according to one of the previous claims, **characterized by** the milling tool (1) exhibiting at least four circumferential edges (31) and exactly two first front edges (9), or exactly three first front edges (9), or the milling tool (1) exhibiting exactly three circumferential edges (31), and exactly three first front edges (9) as well as preferably no second front edge (11).

11. Milling tool (1) according to one of the previous claims, **characterized by** at least one of the first edge sections (13) of the at least two first front edges (9) - when viewed in plan view - exhibiting a pre-center position (V), whereby the pre-center position (V) is preferably at least 0,5 % up to a maximum of 4 %, preferably at least 1 % up to a maximum of 3 % of a diameter of the milling tool (1) in the area of the front side (5).

12. Milling tool (1) according to one of the previous claims, **characterized by** a chip flute (33) being assigned to the front edges (9, 11), respectively, whereby a cross-section - that is measured perpendicularly to the central axis (M) - of at least one of the chip flutes (33) in the area of the front side (5) is greater than in an area of the milling tool (1) facing away from the front side (5).

13. Milling tool (1) according to one of the previous claims, **characterized by** the circumferential edges (31) at the base body (3) being arranged with unequal separation angles.

14. Milling tool (1) according to one of the previous claims, **characterized by** at least two of the circumferential edges (31) exhibiting unequal angles of twist.

## Revendications

1. Outil de fraisage (1) avec
- un corps de base (3), un axe central (M) et une face frontale (5), dans lequel
- au moins deux premières lames frontales (9) définies géométriquement, disposées sur la face frontale (5) du corps de base (3), présentent respectivement une première partie de lames (13) tournée vers l'axe central (M),
**caractérisé en ce que**
- les premières parties de lames (13) des au moins deux premières lames frontales (9) sont formées de manière ascendant vers l'axe central (M), de sorte qu'elles forment une pointe de centrage (15), et **en ce que**
- la pointe de centrage (15) comparée à un point axial le plus à l'extérieur (17) des au moins deux premières lames frontales (9) est en retrait en direction axiale.

2. Outil de fraisage (1) selon la revendication 1, **caractérisé en ce que** les premières lames frontales (9) présentent respectivement une seconde partie de lames (23) détournée de l'axe central (M), qui est ascendante vers une ligne périphérique imaginaire du corps de base (3).

3. Outil de fraisage (1) selon une quelconque des revendications précédentes, **caractérisé en ce que** les secondes parties de lames (23) sont ascendante en forme d'arc de manière convexe vers la ligne périphérique imaginaire.

4. Outil de fraisage (1) selon une quelconque des revendications précédentes, **caractérisé en ce que** les premières lames frontales (9) traversent un minimum (25) dans une zone de transition entre les premières parties de lames (13) et les secondes parties de lames (23).

5. Outil de fraisage (1) selon une quelconque des revendications précédentes, **caractérisé en ce qu'**aux premières parties de lames (13) sont assignées des premières faces de coupe (27), les secondes parties de lames (23) étant assignées des secondes faces de coupe (29), les premières faces de coupe (27) et les secondes faces de coupe (29) de chaque lame frontale (9) incluant l'une avec l'autre respectivement au moins par endroits un angle différent de 0°.

6. Outil de fraisage (1) selon une quelconque des revendications précédentes, **caractérisé en ce qu'**au moins une seconde partie de lames (23) des lames frontales (9) présente - vue du dessus sur la face frontale (5) - une position centrale inférieure (U), la position centrale inférieure (U) étant de préférence d'au moins 0,2 % à un maximum de 2 %, de préférence d'au moins 0,5 % à un maximum de 1,5 % d'un diamètre de l'outil de fraisage (1) dans la zone de la face frontale (5).

7. Outil de fraisage (1) selon une quelconque des revendications précédentes, **caractérisé en ce qu'**au moins une des au moins deux premières lames frontales (9) se transforme en une lame périphérique (31) disposée sur une périphérie du corps de base (3).

8. Outil de fraisage (1) selon une quelconque des revendications précédentes, **caractérisé en ce qu'**au moins une des au moins deux premières lames frontales (9) se transforme en une lame périphérique (31) assignée à celle-ci via un tracé en arc.

9. Outil de fraisage (1) selon une quelconque des revendications précédentes, **caractérisé en ce que**, sur la périphérie du corps de base (3) sont disposées plus de deux lames périphériques (31), au moins une seconde lame frontale (11) qui se transforme en une des lames périphériques (31) terminant en une seconde partie de lames (23).

10. Outil de fraisage (1) selon une quelconque des revendications précédentes, **caractérisé en ce que** l'outil de fraisage (1) présente au moins quatre lames périphériques (31) et exactement deux premières lames frontales (9) ou exactement trois premières lames frontales (9), ou **en ce que** l'outil de fraisage (1) présente exactement trois lames périphériques (31) et exactement trois premières lames frontales (9) ainsi que de préférence aucune seconde lame frontale (11).

11. Outil de fraisage (1) selon une quelconque des revendications précédentes, **caractérisé en ce qu'**au moins une des premières parties de lames (13) des au moins deux premières lames frontales (9) présente - vue du dessus - une position centrale avant (V), la position centrale avant (V) faisant de préférence d'au moins 0,5 % à un maximum de 4 %, de préférence d'au moins 1 % à un maximum de 3 % d'un diamètre de l'outil de fraisage (1) dans la zone de la face frontale (5).

12. Outil de fraisage (1) selon une quelconque des revendications précédentes, **caractérisé en ce que** les lames frontales (9, 11) sont assignées chacun une rainure à copeaux (33), une section transversale - mesurée perpendiculairement à l'axe central (M) - d'au moins une des rainures à copeaux (33) étant plus grande dans la zone de la face frontale (5) que dans une zone de l'outil de fraisage (1) détournée de la face frontale (5).

13. Outil de fraisage (1) selon une quelconque des revendications précédentes, **caractérisé en ce que** les lames périphériques (31) sont disposées sur le corps de base (3) avec des angles de pas inégaux.

14. Outil de fraisage (1) selon une quelconque des revendications précédentes, **caractérisé en ce qu'**au moins deux des lames périphériques (31) présentent des angles de torsion inégales.
